# EUROPEAN PATENT APPLICATION

(11) **EP 4 530 320 A1**
(43) Date of publication of application: **02.04.2025**
(21) Application number: 23382981.1
(22) Date of filing: 27.09.2023
(51) Int. Cl.: C09D 5/00, C09D 5/24, C09D 7/65, C09D 7/40, C09D 163/00

(54) **SELF-HEALING COATING, SELF-HEALING AIRCRAFT EXTERNAL SURFACE AND ITS MANUFACTURING METHOD AND REPAIRING METHOD OF AN AIRCRAFT EXTERNAL SURFACE**

(71) Applicant: Airbus Operations S.L.U., 28906 Getafe, Madrid (ES)
(72) Inventor: MARTIN MORENO, Zulima, 28906 Getafe (ES); VÁZQUEZ SÁNCHEZ, Pablo, 28906 Getafe (ES); BRIZELA DORADO, Juan, 28906 Getafe (ES); GONZALEZ PROLONGO, Silvia, 28933 Móstoles (ES); JIMENEZ SUAREZ, Alberto, 28933 Móstoles (ES); FERNANDEZ SANCHEZ-ROMATE, Xoan Xose, 28933 Móstoles (ES); MARTINEZ DIAZ, David, 28933 Móstoles (ES)
(74) Representative: Elzaburu S.L.P.

(57) **Abstract**

Self-healing coating (1) comprising:
• an epoxy material (4),
• carbon fibers (5) dispersed within the epoxy material (4) to make the self-healing coating (1) electrically conductive, and
• a thermoplastic self-healing agent (6) dispersed within the epoxy material (4) configured to be adapted to melt upon heating above a predetermined temperature by application of an electric current to the self-healing coating (1).

## Description

### Field of the invention

The invention relates to the field of aircraft external surfaces made of carbon composite materials with healing or auto-repairing capacities. The invention is applicable in aircrafts subjected to a lightning strike.

### Background of the invention

The use of composite materials in aircraft structures provides major advantages but also low values of both electrical and thermal conductivities compared to metallic structures.

To minimize these effects several metallizing techniques of the composite structure as well as the implementation of conductive diverting systems at the structural joints have been used. For instance, current composite wing covers use metal-based foils in order to create electrical paths to generate protection against lightning strikes. Different solutions may be implemented in a wing depending on the energy received in a lightning strike and the criticality of the area.

One of the difficulties presented by these solutions is that the mentioned metallic layer is applied manually, as it is difficult to integrate it within an automatic laminate lay-up system used in the aeronautical composite production. It makes the process costly. Besides, when the metallic layer is applied in the form of metallic strips at joints in the composite structure, the compatibility between the metallic material and the composite laminate in the structure requests particular attention, due to the differences of material properties.

Moreover, these solutions also present the disadvantage of making the composite structures heavy, which is a drawback in aeronautic structures, in which the minimisation of weight is a main objective.

### Summary of the invention

In a first object, the invention is directed to a self-healing coating that comprises the following materials:
- an epoxy material, which is the base material of the coating that binds the rest of the materials together,
- carbon fibers dispersed or spread within the epoxy material to make the self-healing coating electrically conductive,
- a thermoplastic self-healing agent dispersed within the epoxy material configured to be activated when the thermoplastic self-healing agent is heated due to the application of an electric current to the self-healing coating.

The self-healing coating is therefore electrically conductive and self-repairing. It is based on carbon fibers that act as conductive elements that can activate the thermoplastic self-healing agent by Joule effect. The thermoplastic self-healing agent, when open to a damaged area and activated by Joule effect flows so as to fill the void or damage. Said coating can thus replace a metallic layer, for instance, a copper mesh, for lightning protection.

The function of the thermoplastic element, in terms of electrical continuity, is to prevent a discontinuity in the coating from occurring. As long as this does not occur, the conductivity can be maintained because it only requires that the carbon fibers are at a certain distance from each other to ensure the electrical path, and that there is no discontinuity in the coating.

Regarding lightning strike protection, the aim of the self-healing coating is to be placed in areas with a low probability of suffering lightning strikes to form a protection or replace the existing protection in those areas. Nowadays, these areas with low probability may not always be covered with lightning strike protection and/or the protection may mainly be placed to create an electrical path between areas of high criticality.

The self-healing coating object of the invention solves the need of a continuous path of metallic foils between high criticality areas of, for instance, a lifting surface, by transmitting the energy between the areas through the coating and the carbon structure.

According to the above, the self-healing mechanism of the coating is triggered through the application of a voltage from an external electrical source to the coating. Based on the Joule effect generated by on the carbon fibers it will generate enough heating on the coating to achieve the needed temperature to activate the thermoplastic self-healing agent to melt it.

Thus, this coating will improve the electrical behavior of the component in which it is applied. In case of an external surface of an aircraft it will reduce the lightning strike protections materials, maintenance operations and recurrent costs. An external surface may be a fuselage, wings or an empennage.

Another benefit of the self-healing coating is that it reduces the risk of breakage of the electrical path due to external damages as it may happen in metallic layers. The risk of breakage is lower due to the instantaneous repair capability of the invention, while in metallic coatings, it is necessary to make the repair afterwards on ground. It should be noted that if the damage is due to an electrical overload, for instance, a lightning strike, the thermoplastic self-healing agent will be activated, so that it can, at least in part, repair damages to the coating on the spot, during flight.

Therefore, the following known elements or steps are intended to be reduced, improved, or eliminated thanks to the object of the invention:
- dedicated lightning strike materials for light impact areas that would be superseded by the coating object of the invention.
- elimination of dedicated maintenance operations in case of damages due to lightning strikes.

It is also an object of the invention a self-healing aircraft external surface made of carbon composite material and comprising a self-healing coating according to the above technical features.

It is also a further object of the invention a manufacturing method of a self-healing aircraft external surface. The method comprises the following steps:
- providing at least a fresh or cured carbon composite material layer,
- applying a self-healing coating as mentioned before on the surface of the fresh or cured carbon composite material layer, and
- performing a curing cycle for the self-healing coating applied on the fresh or cured carbon composite layer.

Thus, contrary to known methods, the coating is integrated during the manufacturing process of the composite part. The lightning protection is applied automatically, within the automatic lay-up process. In addition, a more homogeneous final structure is pursued.

It is another object of the invention a repairing method of an aircraft external surface. The aircraft external surface, for instance a fuselage, a wing or an empennage, is made of carbon composite material and comprises a self-healing coating. The repairing method comprises the step of applying a voltage to the self-healing coating to activate the thermoplastic self-healing agent to melt upon heating above a predetermined temperature by application of an electric current to the self-healing coating.

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a schematic cross-section of a carbon composite portion of an aircraft fuselage comprising a self-healing coating having a damage due to a lightning strike.
Figure 2 shows the schematic cross-section of figure 1 and a low voltage application system with the damage already repaired.
Figure 3 shows an image if the microstructure of an embodiment of the self-healing coating object of the invention.

### Detailed description of the invention

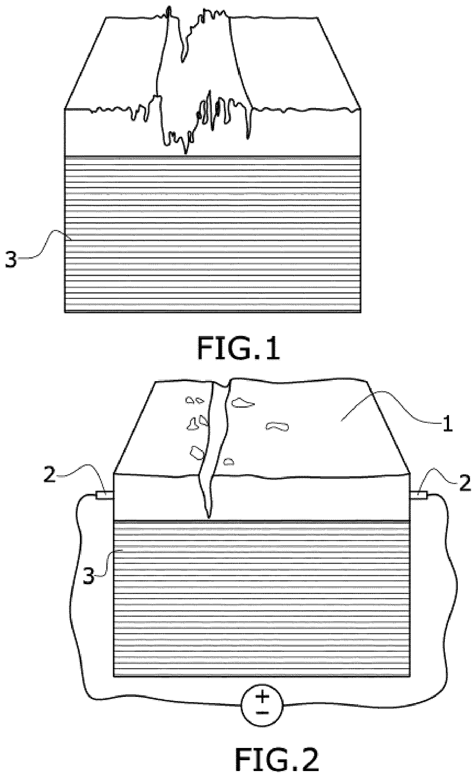

Figures 1 and 2 show a schematic cross-section of an embodiment of a portion of a carbon composite self-healing aircraft external surface, for instance, a fuselage, comprising the carbon composite material (3) and the self-healing coating (1). In figure 2 a low voltage application system is depicted, and the damage has already been repaired.

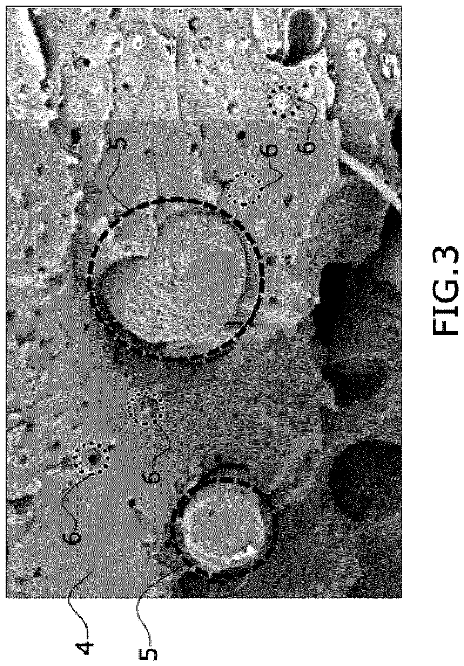

As previously stated, it is an object of the invention a self-healing coating (1) as can be seen, for instance, in figure 3, comprising:
- an epoxy material (4), that is the base of the coating,
- carbon fibers (5) dispersed within the epoxy material (4) to make the self-healing coating (1) electrically conductive,
- a thermoplastic self-healing agent (6) dispersed within the epoxy material (4) configured to melt upon heating above a predetermined temperature by application of an electric current to the self-healing coating (1).

The epoxy material (4) is to be selected to favor compatibility with qualified aeronautical materials. They can be modified as their only purpose is to ensure proper adhesion with the carbon composite material (3).

In an embodRiment, the percentage of carbon fibers (5) to reach the desired conductivity is between 10%-30% in weight of the self-healing coating (1). More than 30% of carbon fibers (5) may tend to agglomerate.

The amount of carbon fibers (5) specified ensures that there are always fibers (5) close together to ensure the electrical path. In addition, as previously explained, the thermoplastic element prevents any discontinuity in the coating to stop the electrical path.

In an embodiment, the electrical conductivity that the carbon fibers (5) provide is above 3 S/m.

In an embodiment, the carbon fibers (5) come from the recycling of end-of-life carbon composite parts. It brings the benefit of a sustainable origin of the coating which uses recycled carbon fibers (5) coming from the recycling of end-of-life products, i.e., products at the end of their useful life. It improves the environmental footprint impact and closes the lifecycle of the material.

In an embodiment, the length of the carbon fibers (5) is between 50-300 µm. Carbon fibers (5) are usually around 7 µm in diameter.

Another advantage of the recycling process is that it reduces the size of the carbon fibers (5) to an optimal length to be evenly dispersed on the epoxy blend to create an electrical path across the coating.

In an embodiment, the thermoplastic self-healing agent (6) is evenly dispersed within the epoxy material (4) in order to allow self-healing in all coating directions. Evenly dispersed means in approximately equals amounts across the epoxy material (4).

In an embodiment, the thermoplastic agent (6) comprises spherical particles. Preferably, the size in diameter of the spherical particles is between 3 µm and 15 µm, more particularly it is approximately 10 µm. The above diameters refer to average diameters, as they are not perfect spherical elements.

In an embodiment, the thermoplastic agent (6) being used is Polycaprolactone (PCL) which has a melting point between 60ºC and 80ºC approximately. The desired repair temperature may be, for instance, 150 ºC to ensure maximum fluidity of the thermoplastic agent (6). Other thermoplastic agents (6) could be used for a desired repair temperature of 150°C. They should have at most a melting temperature point of 120°C to ensure adequate fluidity.

In any case, with a repair temperature of 150 degrees it would be convenient to use a thermoplastic with a maximum melting temperature of 120 degrees to ensure a certain fluidity of the thermoplastic at 150 degrees.

The coating could be designed to comprise a permanent system for easily applying a voltage. Alternatively, it can be done superficially with an external system not integrated in the aircraft external surface.

In the first embodiment, in order to apply a voltage to the self-healing coating (1), it may comprise electrical connectors (2) embedded in the self-healing coating (1). The electrical connectors (2) are electrically connectable to the voltage source to receive an electrical current. This embodiment is depicted in figure 2.

In this embodiment the repairing method of an aircraft external surface comprises the step of electrically connecting the electrical connectors (2) to a voltage source.

As previously stated, the self-healing coating (1) may alternatively comprise an external voltage system comprising the electrical connectors to apply a voltage drop to the self-healing coating (1). In this embodiment, the repairing method of an aircraft external surface comprises the step of connecting the self-healing coating (1) to a voltage system comprising electrical connectors (2) connectable to the self-healing coating (1) for applying an electrical current.

The self-healing coating (1) is applied on the surface of a fresh or cured carbon composite layer, followed by a curing cycle for the self-healing coating (1) is performed.

The curing cycle for the epoxy coating will depend on the epoxy component. Two epoxy systems can be used:
- in an embodiment wherein a cured composite material (3) layer is provided the maximum curing temperature is between 115 ºC and 125 ºC, preferably 120 ºC,
- in another embodiment wherein a fresh composite material (3) layer is provided, the maximum curing temperature is between 180 ºC and 210 ºC.

## Claims

1. Self-healing coating (1), **characterized in that** it comprises:
• an epoxy material (4),
• carbon fibers (5) dispersed within the epoxy material (4) to make the self-healing coating (1) electrically conductive, and
• a thermoplastic self-healing agent (6) dispersed within the epoxy material (4) configured to be adapted to melt upon heating above a predetermined temperature by application of an electric current to the self-healing coating (1).

2. Self-healing coating (1), according to claim 1, wherein the length of the carbon fibers (5) is between 50-300 µm.

3. Self-healing coating (1), according to any preceding claim, wherein the carbon fibers (5) come from the recycling of end-of-life carbon composite parts.

4. Self-healing coating (1), according to any preceding claim, wherein the percentage of carbon fibers (5) is between 1 0%-30% in weight of the self-healing coating (1).

5. Self-healing coating (1), according to any preceding claim, wherein the thermoplastic self-healing agent (6) is evenly dispersed within the epoxy material (4).

6. Self-healing coating (1), according to any preceding claim, wherein the thermoplastic self-healing agent (6) comprises spherical particles.

7. Self-healing coating (1), according to claim 6, wherein the size of the spherical particles is between 3 µm and 15 µm in diameter.

8. Self-healing coating (1), according to any preceding claim, wherein it comprises electrical connectors (2) embedded in the self-healing coating (1), the electrical connectors (2) being electrically connectable to a voltage source to receive an electrical current.

9. Self-healing aircraft external surface, comprising carbon composite and **characterized in that** the self-healing aircraft external surface comprises a self-healing coating (1) according to any preceding claim.

10. Manufacturing method of a self-healing aircraft external surface, **characterized in that** it comprises the following steps:
- providing at least one fresh or cured carbon composite material (3) layer,
- applying a self-healing coating (1) according to any one of the claims 1 to 8 on the surface of the fresh or cured carbon composite material (3) layer, and
- performing a curing cycle for the self-healing coating (1) applied on the fresh or cured carbon composite material (3) layer.

11. Manufacturing method of a self-healing aircraft external surface, according to claim 10, wherein a cured composite material (3) layer is provided, and the maximum curing temperature is between 115ºC and 125ºC.

12. Manufacturing method of a self-healing aircraft external surface, according to claim 10, wherein a fresh composite material (3) layer is provided, and the maximum curing temperature is between 180ºC and 210ºC.

13. Repairing method of an aircraft external surface, **characterized in that** the aircraft external surface is made of carbon composite material (3) and comprises a self-healing coating (1) according to any preceding claim 1 to 8, the repairing method comprising the step of applying a voltage to the self-healing coating (1) to melt the thermoplastic self-healing agent (6) upon heating above a predetermined temperature by application of an electric current to the self-healing coating (1).

14. Repairing method of an aircraft external surface, according to claim 13, wherein the self-healing coating (1) comprises electrical connectors (2) embedded in the self-healing coating (1), and the repairing method comprises the step of electrically connecting the electrical connectors (2) to a voltage source.

15. Repairing method of an aircraft external surface, according to claim 13, wherein it comprises the step of connecting the self-healing coating (1) to a voltage system comprising electrical connectors (2) connectable to the self-healing coating (1) for applying an electrical current.
